Europäisches Patentamt

European Patent Office

Office européen des brevets

(19)

(11) Numéro de publication: **0 135 428**
**B1**

(12) # FASCICULE DE BREVET EUROPÉEN

(45) Date de publication du fascicule du brevet:
25.11.87

(51) Int. Cl.⁴: **G 01 P 3/48**

(21) Numéro de dépôt: 84401655.0

(22) Date de dépôt: 09.08.84

(54) Procédé de détermination d'une vitesse et dispositif de mise en oeuvre.

(30) Priorité: 30.08.83 FR 8313869

(43) Date de publication de la demande:
27.03.85 Bulletin 85/13

(45) Mention de la délivrance du brevet:
25.11.87 Bulletin 87/48

(84) Etats contractants désignés:
AT BE CH DE GB IT LI LU NL SE

(56) Documents cité:
DE-A-3 150 807

(73) Titulaire: **LA TELEMECANIQUE ELECTRIQUE, 33 bis, avenue du Maréchal Joffre, F-92000 Nanterre (FR)**

(72) Inventeur: **Parisel, Jacques, Hameau de Villa St Claude Chemin du Val Bosquet, F-06600 Antibes (FR)**
Inventeur: **Fauvet, Jean-Pierre, Voie Altirama Avenue Frédérick Mistral, F-06130 Grasse (FR)**

(74) Mandataire: **Marquer, Francis, CABINET MOUTARD 35, avenue Victor Hugo Résidence Champfleury, F-78180 Voisins-le-Bretonneux (FR)**

**0 135 428**

## Description

La présente invention concerne un procédé de détermination de la vitesse de déplacement linéaire ou de rotation d'un organe portant un capteur produisant des impulsions dont la fréquence est proportionnelle à cette vitesse et le dispositif de mise en oeuvre du procédé.

On connaît des dispositifs dans lequels on mesure, d'une part, le déplacement, par le comptage des impulsions issues d'un capteur et, d'autre part, le temps, en enregistrant, dans un deuxième compteur, les impulsions d'une horloge rapide. Un tel dispositif est décrit dans le brevet FR 2 420 767.

Toutefois, le dispositif du brevet FR 2 420 767 présente l'inconvénient de nécessiter une deuxième horloge, dite lente, pour engendrer un intervalle de temps pendant lequel on compte les impulsions issues du capteur et les impulsions d'horloge. Un autre inconvénient du dispositif est la nécessité de synchroniser l'ensemble du dispositif sur l'horloge rapide.

Enfin, on s'aperçoit que, lorsque l'on a fixé la fréquence de l'horloge rapide et la fréquence de l'horloge lente, le dispositif ne peut fonctionner correctement que dans une plage restreinte de fréquence d'impulsions issues de capteur, ladite plage étant, de toutes façons, inférieure à la fréquence de l'horloge rapide.

D'autre part, la fréquence d'horloge lente limite également dans les basses fréquences la plage de fonctionnement du capteur.

Cela est d'autant plus vrai que, dans le brevet FR 2 420 767, on a été amené à prévoir un circuit permettant de déterminer si la fréquence des impulsions issues du capteur est plus basse que celle de l'horloge lente et, dans ce cas, de déclencher le calcul uniquement sur l'apparition des impulsions issues du capteur.

De même, dans l'article de S. BEDERMAN, d'IBM T.D.B., Vol 13, N° 4, Septembre 1970, pages 1017 à 1018, on a décrit un dispositif dans lequel le compteur de mesure du temps 19 est remis à zéro par les impulsions issues du capteur, ce qui oblige donc le capteur à fonctionner à des fréquences inférieures à la fréquence de l'horloge de mesure du temps. Par ailleurs, les interruptions qui provoquent le transfert des contenus des compteurs dans des registres ne sont pas corrélées avec les impulsions du capteur et les impulsions d'horloge. Celà risque de faire perdre des impulsions de capteur ou d'horloge et impose la nécessité de registres supplémentaires pour tenir compte du temps courant.

La présente invention a pour but principal de pallier les inconvénients précédents en réalisant un procédé de détermination de la vitesse de déplacement d'un organe portant un capteur transmettant des impulsions, dont la fréquence peut s'étendre dans une large plage de fonctionnement et être quelconque par rapport à la fréquence du fonctionnement d'une horloge de mesure de temps.

Ce premier but est atteint grâce au procédé défini par la revendication 1.

Un autre but de l'invention est de déterminer la vitesse avec une bonne précision quelle que soit la plage de fonctionnement du capteur.

Ce deuxième but est atteint du fait que les temps de masquage peuvent être de durée variable en fonction de la vitesse précédemment déterminée. Selon une variante de réalisation de l'invention, la durée de masquage est déterminée par un troisième compteur préchargé à une valeur présélectionnée qui effectue un décomptage au rythme de l'horloge et fournit au cours du décomptage de la valeur présélectionnée, jusqu'à 0, un signal de masquage. Un dernier but est la réalisation d'un dispositif permettant la mise en oeuvre du procédé et tel que défini par la revendication 6.

D'autres caractéristiques et avantages de l'invention apparaîtront plus clairement à la lecture de la description ci-après:

Au dessin annexé:

La figure 1 représente un dispositif de mise en oeuvre du procédé selon l'invention;

La figure 2 représente un diagramme qui illustre le fonctionnement des compteurs programmables utilisés dans le dispositif;

La figure 3 représente la table de vérité définissant les fonctions réalisées par les compteurs programmables;

La figure 4 représente le format du mot de contrôle qui permet la programmation des compteurs;

La figure 5 représente des diagrammes, en fonction du temps, illustrant le fonctionnement du dispositif de mise en oeuvre du procédé; et

La figure 6 est un organigramme montrant certaines étapes du procédé.

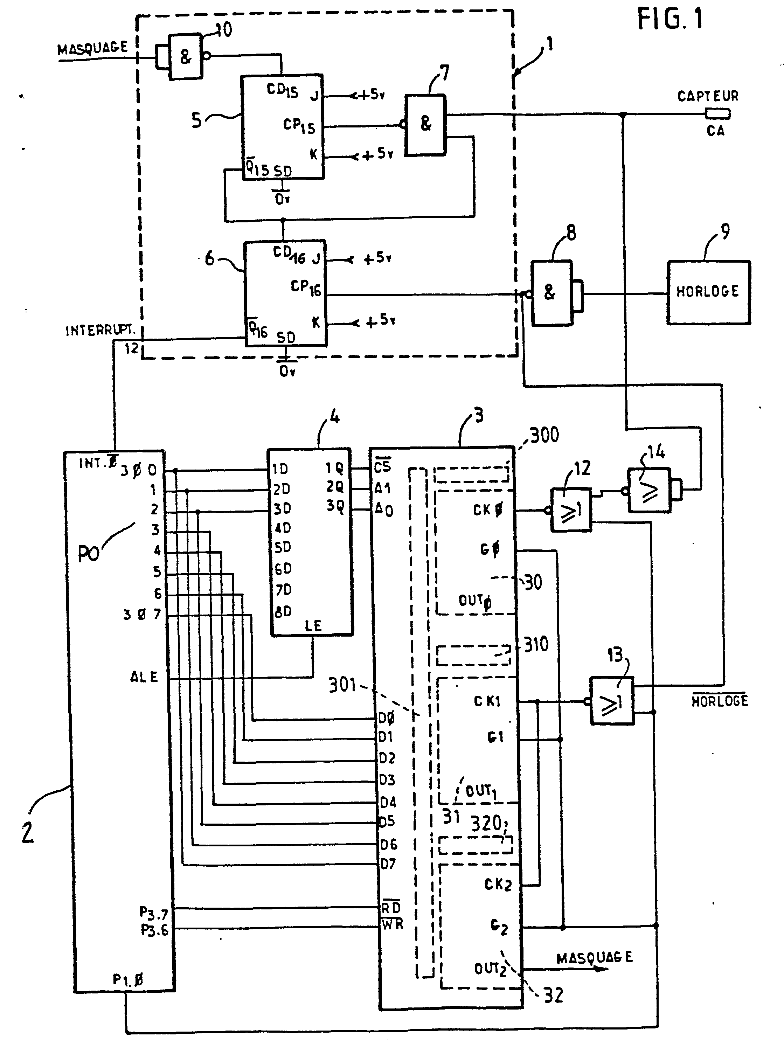

La figure 1 représente le dispositif de détermination de la vitesse de rotation d'un capteur envoyant sur une entrée des impulsions en forme de créneau dont la fréquence est proportionnelle à la vitesse de rotation d'un axe, sur lequel est monté le capteur. La vitesse correspondant à la vitesse maximale est de l'ordre de 100 kHz.

Ce dispositif se compose plus particulièrement d'un circuit logique 1, d'un microprocesseur 2, par exemple de type 8051 de la firme "INTEL", d'un circuit de comptage programmable 3, par exemple de type 8253 de la firme "INTEL", d'un ensemble de bascules de mémorisation regroupées dans un circuit 4, par exemple de type 74 LS 373 de la firme "Motorola" et d'un circuit logique ordonnant la présélection des compteurs du circuit 3.

Le circuit logique 1 comprend deux bascules de type JK, à savoir:

- une première bascule 5 qui reçoit, sur son entrée $CP_{15}$, par l'intermédiaire d'un circuit logique 7 réalisant la fonction NON ET, les impulsions en forme de créneau provenant du capteur (CA), et

- une deuxième bascule 6 qui reçoit sur son entrée $CP_{16}$, par l'intermédiaire d'un inverseur 8, le signal émis par une horloge 9 qui fonctionne, par exemple à une fréquence d'environ 25 kHz pour ne pas saturer le compteur.

0 135 428

Les entrées J et K des deux bascules 5, 6 sont branchées à une source de tension +5V et leurs entrées SD (remise à 1 de Q) sont portées à un potentiel de 0V.

La sortie $\bar{Q}_{15}$ de la bascule 5 est reliée d'une part à l'entrée CD (mise à 0 de Q) de la bascule 6 et, d'autre part, à la deuxième entrée du circuit logique NON ET 7.

Par ailleurs, l'entrée $CD_{15}$ de la bascule 5 reçoit, par l'intermédiaire d'un inverseur 10, un signal de masquage MASQ provenant, comme il sera expliqué par la suite, de la sortie $OUT_2$ du troisième compteur 32 du circuit de comptage.

La sortie $\bar{Q}_{16}$ de la bascule 6, qui constitue en fait la sortie du circuit logique 1 est reliée à l'entrée INT du microprocesseur 2.

Le microprocesseur 2 comprend un port P0 dont les sorties 3Ø à 3Ø7 sont branchées aux entrées D0 à D7 du circuit de comptage 3.

Ce circuit de comptage 3 consiste en un ensemble de trois compteurs programmables 30, 31, 32, avec chacun un registre interne de présélection 300, 310, 320 et un registre commun de lecture 301. Comme il sera expliqué par la suite, le compteur 30 est prévu pour assurer un décomptage des signaux du capteur, le compteur 31 pour le décomptage des impulsions de l'horloge et le compteur 32 pour la détermination du temps de masquage.

Les sorties 3Ø0 à 3Ø2 du port P0 du microprocesseur 2 sont également reliées aux entrées 1D à 3D du circuit 4, lequel est un ensemble de bascules de mémorisation qui, lors de la réception sur son entrée LE d'un signal de niveau 1, valide les entrées 1D à 3D et présente ainsi, sur ses sorties 1Q à 3Q, les valeurs validées tant que la réception d'un nouveau signal LE ne viendra pas modifier les états.

Ce signal LE est fourni par la sortie ALE du microprocesseur 2.

Les sorties 1Q, 2Q, 3Q du circuit 4 sont branchées respectivement aux entrées $\check{C}\check{S}$, $A_1$, $A_0$ du circuit 3.

Par ailleurs, les sorties P3.6 et P3.7 du port P3 du circuit du microprocesseur 2 sont reliées respectivement aux entrées $\overline{WR}$ et $\overline{RD}$ du circuit 3. Enfin, la sortie P10 du port $P_1$ du microprocesseur est reliée, d'une part, aux entrées G0, G1, G2 des compteurs 30, 31, 32 du circuit 4 et, d'autre part, à l'une des entrées de deux circuits logiques NON OU (NOR) 12, 13 dont les sorties sont respectivement reliées aux entrées CK0 et CK1, CK2 des compteurs 30 et 31, 32.

La deuxième entrée du circuit NON OU 12 est connectée à la borne CA (capteur) par l'intermédiaire d'un circuit inverseur 14 tandis que la deuxième entrée du circuit NON OU 13 est connectée à la sortie du circuit inverseur 8.

Le fonctionnement du dispositif exploitant le procédé selon l'invention doit d'abord être précédé de précisions techniques sur les modes de fonctionnement des différents circuits utilisés.

Le microprocesseur 2 possède 4 K mots de 1 octet de programme interne et 128 octets de mémoire vive interne dont deux zones $M_1$ et $M_2$ sont réservées pour la mise en mémoire des informations lues sur les compteurs 30 et 31, comme il sera expliqué par la suite. De plus, ce microprocesseur 2 peut adresser 64 K mots de 1 octet de programme externe et 64 K mots de 1 octet de mémoire vive externe. Les accès entrées-sorties, ainsi que l'adressage du boîtier compteur, sont réalisés comme l'adressage d'une mémoire vive. Les bus du microprocesseur P0 est multiplexé, c'est-à-dire que, pour une lecture on une écriture en mémoire vive externe, l'adresse est disponible dans un premier temps sur le port P0, et doit être conservée dans un registre, par l'intermédiaire d'un signal ALE, et, dans un deuxième temps, le bus associé au port P0 se comporte comme un Bus de données. Ce mode de functionnement est également celui utilisé pour sélectionner le circuit de comptage programmable 3 adressé par le circuit de stockage 4.

Le boîtier du circuit de comptage programmable 3 comprend les trois compteurs à seize bits 30, 31, 32. Chaque compteur peut fonctionner selon six modes (la présente application utilise le mode 1). Les transferts entre le microprocesseur et le circuit de comptage 3 sont de trois sortes:

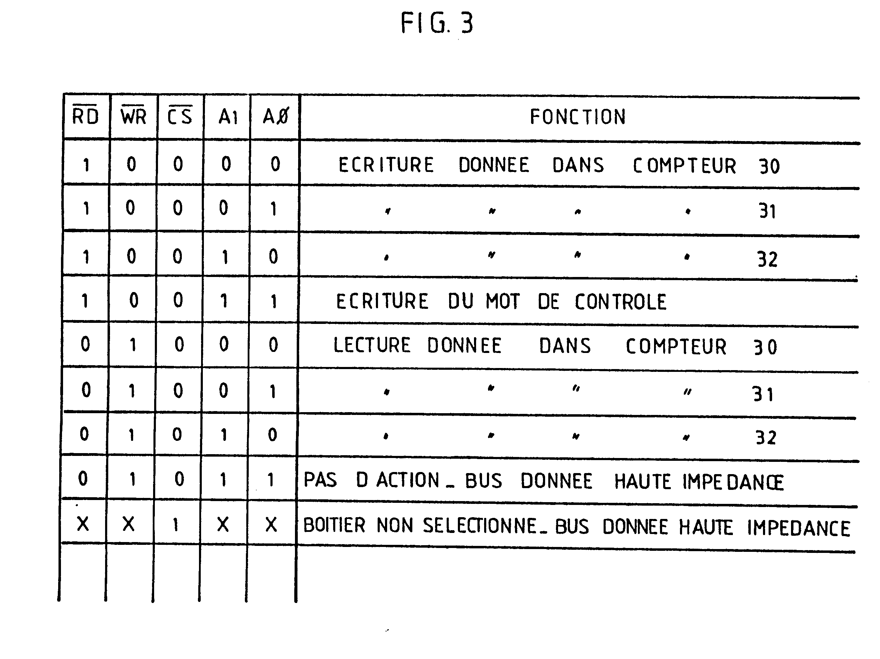

a) écriture, dans le circuit de comptage 3 d'un mot de contrôle:
- Pour programmer le fonctionnement du circuit 3.
- Pour programmer le compteur: à cet effet, on envoie par le port P0 et le circuit 4, un signal 1,0,0, 1,1 respectivement sur $\overline{RD}$, $\overline{WR}$, $\check{C}\check{S}$, $A_1$ $A_0$; puis, on envoie, par le port P0, les niveaux requis sur D7, D6, D5 à D0 pour désigner le compteur, le nombre de bits, le mode de fonctionnement choisi parmi les six possibles, et le mode de codage binaire ou B.C.D.
- Pour faire une lecture d'un compteur: à cet effet, on envoie par le port P0 et le circuit 4, sur $\overline{RD}$, $\overline{WR}$, $\check{C}\check{S}$, $A_1$, $A_0$, respectivement les niveaux correspondants indiqués sur la figure 3; puis on envoie par le port P0, les niveaux O, 0 respectivement sur D5, D4.

b) Chargement des registres internes de présélection 300, 310, 320 à une valeur donnée par l'écriture dans le circuit de comptage 3 d'une donnée qui sera rechargée dans le compteur à chaque transition montante du signal $G_i$ appliqué sur les pattes G0, G1, G2 (validation de la présélection du compteur sélectionné).

c) Lecture donnée de l'état du compteur mémorisé, par transfert successif sur le registre de lecture commun 301 et mémorisation dans une zone de mémoire du microprocesseur. Chaque compteur comprend trois entrées/sorties, à savoir:
- Entrée du signal CK0, CK1, CK2: chaque transition descendante provoque le décompte d'une unité du compteur.
- Entrée de valdiation de la présélection G0, G1, G2.
- Sortie OUT 0, OUT 1, OUT 2 indiquant que le compteur est à zéro.

L'adressage de différentes fonctions se fait de la façon définie à la figure 3.

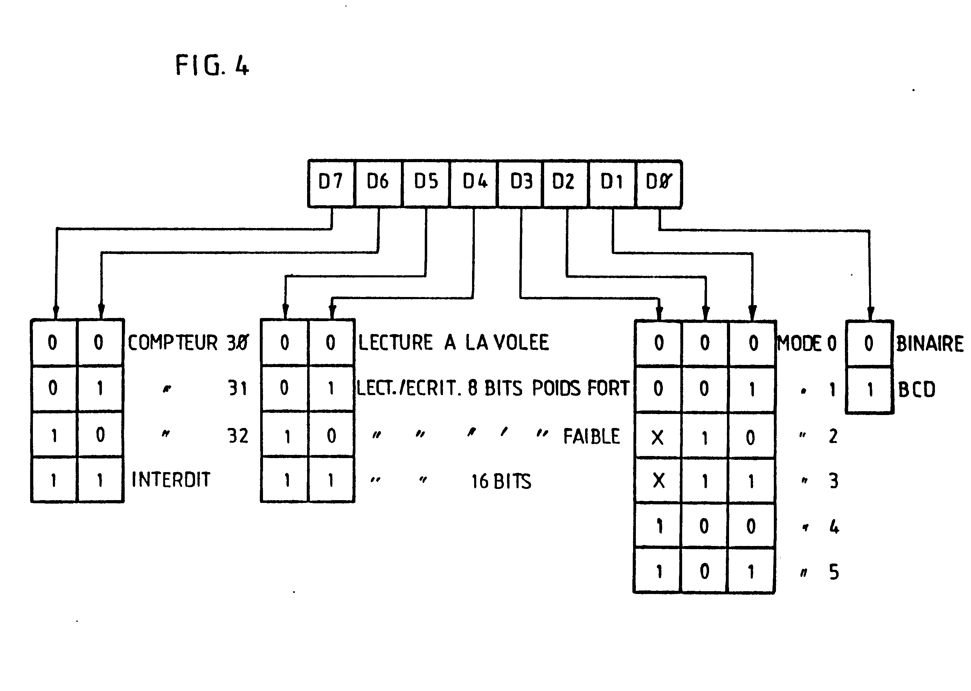

Le format du mot de contrôle est défini de la façon représentée à la figure 4.

3

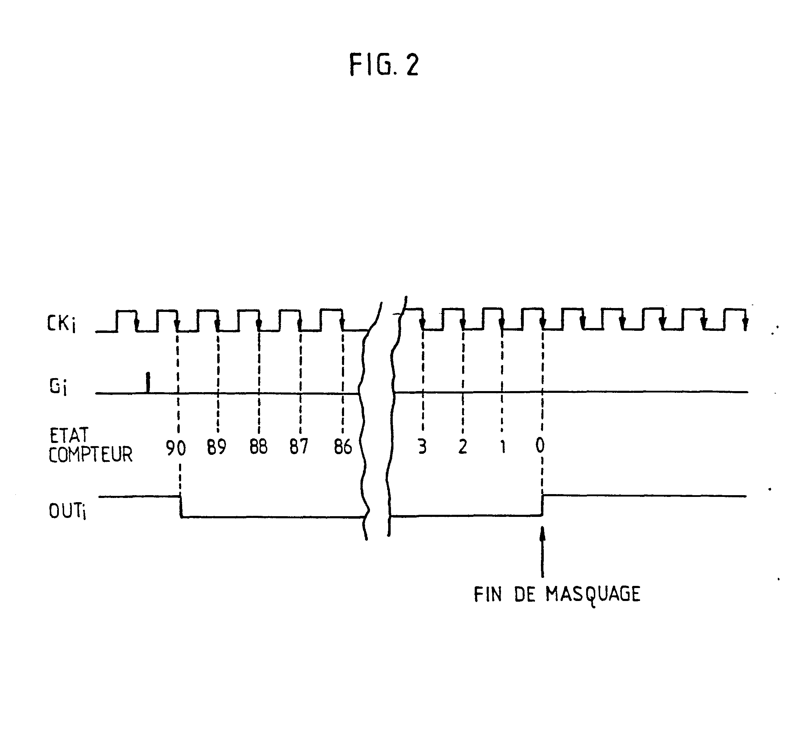

Le fonctionnement d'un compteur progammé en mode 1, qui est le mode utilisé, est représenté par les diagrammes de la figure 2.

Ce diagramme permet de voir que l'écriture du mot de présélection se fait sur le front montant du signal de commande $G_i$ fourni par le port P1 du microprocesseur sur les entrées G0, G1, G2 du circuit de comptage 3.

Ce front doit, pour être pris en compte apparaître 100ns avant le front montant du signal à compter CKi, en sachant que l'état du compteur n'est modifié que sur le front descendant du signal à compter.

Ce résultat est obtenu grâce aux circuits NON OU 12 et 13 qui permettent de bloquer les signaux inversés provenant du capteur et de l'horloge pendant la durée du signal $G_i$.

Ainsi, lors des fronts montants du signal $G_i$, le boîtier 3 effectue un transfert du contenu des registres internes de présélection 310 vers les compteurs correspondants.

Si le contenu du registre i représente le chiffre 90, le compteur i va décompter à partir de 90 sur chaque transition descendante du signal CKi.

Dans notre demand, le compteur 30 recevra par exemple le signal issu du capteur, et les compteurs 31 et 32 le signal d'horloge à 30 kHz provenant du circuit NON OU 13. La commande de la patte $G_i$ est faite par le port d'entrée/sortie du microprocesseur P10.

Etant donné que ce boîtier travaille en décompteur, les données lues lors d'un calcul de vitesse seront complétées à 1. De même pour la présélection qui, au lieu d'être 0001 (hexadécimale), sera FFFE (65535 en décimal).

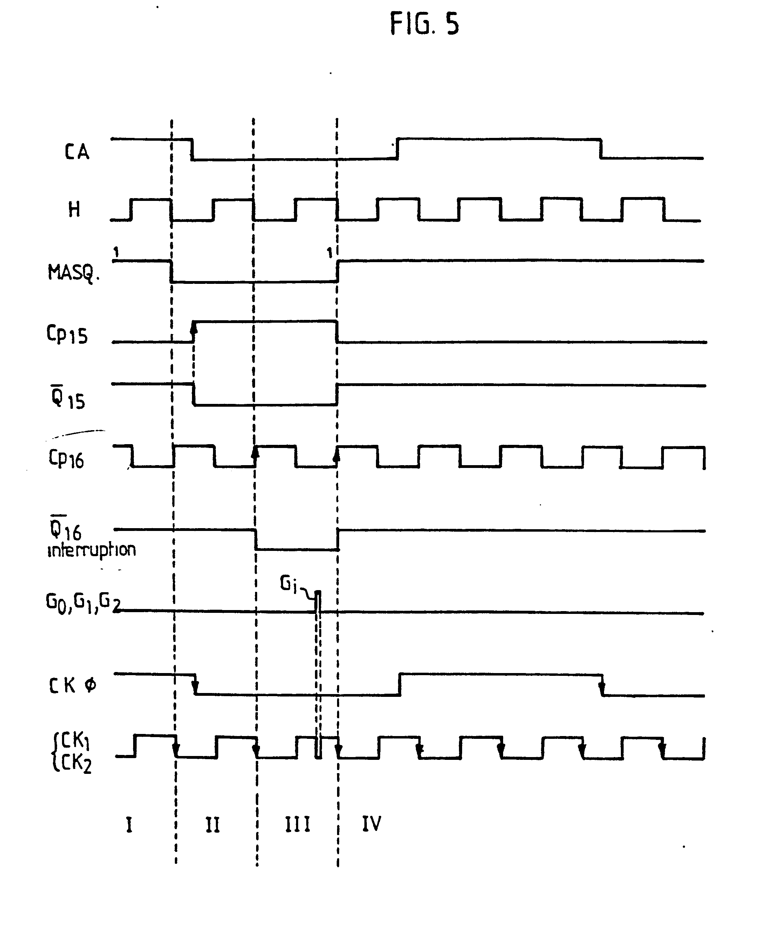

Le fonctionnement du circuit logique 1 va maintenant être expliqué à l'aide de la figure 5, dans laquelle on a représenté les diagrammes des principaux signaux en fonction du temps.

| | | |
|---|---|---|
| Ca | représente | le signal issu du capteur: |
| H | représente | le signal d'horloge; |
| $CP_{15}$ | est | le signal présent à l'entrée de la bascule 5; |
| $\bar{Q}_{15}$ | est | le signal de sortie de la bascule 5; |
| $CP_{16}$ | est | le signal présent à l'entrée CP de la bascule 6; |
| $\bar{Q}_{16}$ | représente | le signal à la sortie Q de la bascule 6; |
| MASQ | représente | le signal de masquage; |
| G0,G1, G2 | représentent | le signal de réinitialisation des compteurs 30, 31 et 32; |
| CK0 | représente | le signal à l'entrée CK0 du compteur 30; |
| CK1 et CK2 | représentent | le signal aux entrées CK1 et CK2 des compteurs 31 et 32. |

Comme précédemment mentionné, le procédé selon l'invention comprend, après une période d'initialisation où s'effectue le chargement des compteurs 30, 31, 32 à une valeur présélectionnée, une phase de masquage des signaux d'interruption transmis par la sortie $\bar{Q}_{16}$ de la bascule JK 6 à l'entrée INT du microprocesseur 2.

Ce masquage est provoqué par le signal MASQ émis par la sortie OUT 2 du compteur 32 pendant que celui-ci effectue son décomptage. En effet, selon ce mode de réalisation, le temps de masquage est déterminé par le compteur 32 qui, préchargé au moment de l'initialisation, effectue, à la suite du signal $G_i$ émis par le port P1 du microprocesseur, un décomptage au rythme de l'horloge, comme représenté figure 2 (le décomptage commence au premier front descendant du signal d'horloge qui suit l'impulsion $G_i$).

Après avoir été inversé par l'inverseur 10, le signal MASQ est appliqué à l'entrée CD de la bascule JK 5, ce qui provoque la mise à l'état logique 0 de la sortie $Q_{15}$ de la bascule 5 et la mise à l'état logique 1 de sa sortie $\bar{Q}_{15}$.

L'entrée $CD_{16}$ de la bascule JK 6 se trouve portée à l'état logique 1, de même que sa sortie $\bar{Q}_{16}$. On obtient donc un masquage du signal d'interruption à l'entrée INT du microprocesseur 2. Cet état correspond à la partie I du diagramme représenté figure 5. Dans cet état, le circuit NON ET 7 a ses deux entrées au niveau logique 1 et sa sortie (courbe $CP_{15}$) au niveau logique 0.

Cet état se maintient jusqu'au moment où le compteur 32 arrive à 0. A ce moment le signal de masquage MASQ change d'état, de sorte que l'entrée $CD_{15}$ de la bascule 5 passe à l'état 0. Ainsi, lors du premier front descendant suivant du signal CA, l'entrée $CP_{15}$ passe à l'état logique 1 tandis que la sortie $\bar{Q}_{15}$ passe à l'état logique 0 débloquant ainsi la bascule 16 (partie II de la figure 5).

De ce fait, dès le premier front montant du signal d'horloge inversé appliqué à l'entrée $CP_{16}$, la sortie $\bar{Q}_{16}$ de la bascule 16 passera à l'état 0 (fin de masquage), transition qui provoquera une interruption et amorcera ainsi une phase de lecture des compteurs.

Comme précédemment mentionné, dans la présente demande, un seul registre 301 est utilisé pour la lecture des compteurs 30 et 31. De ce fait, la lecture des compteurs 30 et 31 ne pourra pas s'effectuer simultanément mais successivement selon la séquence suivante:

- Dans une première étape, le microprocesseur 2 commande le transfert du contenu du compteur 30 dans le registre de lecture 301 (premier tamponnage);

- Dans une seconde étape s'effectue le transfert du contenu du registre de lecture dans la zone réservée M1 de la mémoire vive du microprocesseur;

- Dans une troisième étape, le microprocesseur commande le transfert du contenu du compteur 31 dans le registre de lecture 301 (deuxième tamponnage);

- Dans une quatrième étape, s'effectue le transfert du contenu du registre de lecture 301 dans la zone réservée M2 de la mémoire vive du microprocesseur.

Le microprocesseur 2 peut ensuite effectuer le calcul de la vitesse en effectuant le quotient du contenu de la zone de mémoire M1 qui se trouve chargée par le contenu du compteur 30 par le contenu de la zone de mémoire M2 qui se trouve chargée par le contenu du compteur 31 (partie III de la figure 5).

A la suite de cette lecture, le microprocesseur émet par le port P1 un signal $G_i$ dont le front montant commande l'écriture du mot de présélection puis, lors du front descendant du signal horloge suivant, le signal MASQ émanant de la sortie OUT 2 du compteur 32 passe à 1 et une nouvelle séquence est à nouveau entamée (partie IV de la figure 5).

Dans l'exemple précédemment décrit, la précharge des compteurs 30, 31 et 32 est la suivante:
- le compteur 30 est préchargé à 65535 (valeur décimale);
- le compteur 31 est préchargé à 65535 (valeur décimale); et
- le compteur 32 qui détermine le temps de masquage est préchargé à 90 (valeur décimale).

On notera toutefois que le temps de masquage des interruptions peut être réglé en fonction de la plage de vitesse de rotation dans laquelle sera utilisé le dispositif.

Dans des applications telles que la mesure de la vitesse de rotation d'un moteur électrique pour la détermination des angles d'allumage des interrupteurs du convertisseur d'alimentation d'un moteur triphasé, on utilise des temps de masquage par exemple de l'ordre de 3,3 ms, pour un réseau de 50 Hz.

De même, la durée du temps de masquage peut évoluer en fonction de la vitesse de rotation du capteur, pour conserver une précision relativement bonne dans toute la plage de mesure.

Le procédé et le dispositif selon l'invention permettent donc, soit d'obtenir une bonne précision de mesure sur toute la plage, en faisant varier le temps de masquage, soit d'obtenir une précision un peu moins bonne sur la détermination de la vitesse, mais sans devoir modifier le temps de masquage et ce, pour une plage de fonctionnement plus étendue, même si la fréquence de fonctionnement du capteur est supérieure ou inférieure à la fréquence d'horloge. Ce n'est pas le cas dans les dispositifs actuellement connus où l'on a toujours une fréquence du signal d'horloge supérieure à la fréquence du signal capteur.

Par ailleurs, en plus de la détermination de la vitesse de rotation, le procédé et le dispositif précédemment décrits présentent l'avantage de pouvoir utiliser le microprocesseur également à d'autres tâches. Ainsi, dans le cas de l'application de la détermination de la vitesse à une commande de régulation de vitesse pour un moteur, le microprocesseur est utilisé principalement pour réaliser les fonctions de régulation, de sécurité et d'amorçage d'un variateur de vitesse électronique.

Dans ce cas, le programme principal a besoin, périodiquement (par exemple toutes les 3,3 millisecondes), d'une information de vitesse pour le calcul de l'erreur sur la vitesse; on utilise pour cela un masquage ayant, par exemple, une durée de 3,3 ms.

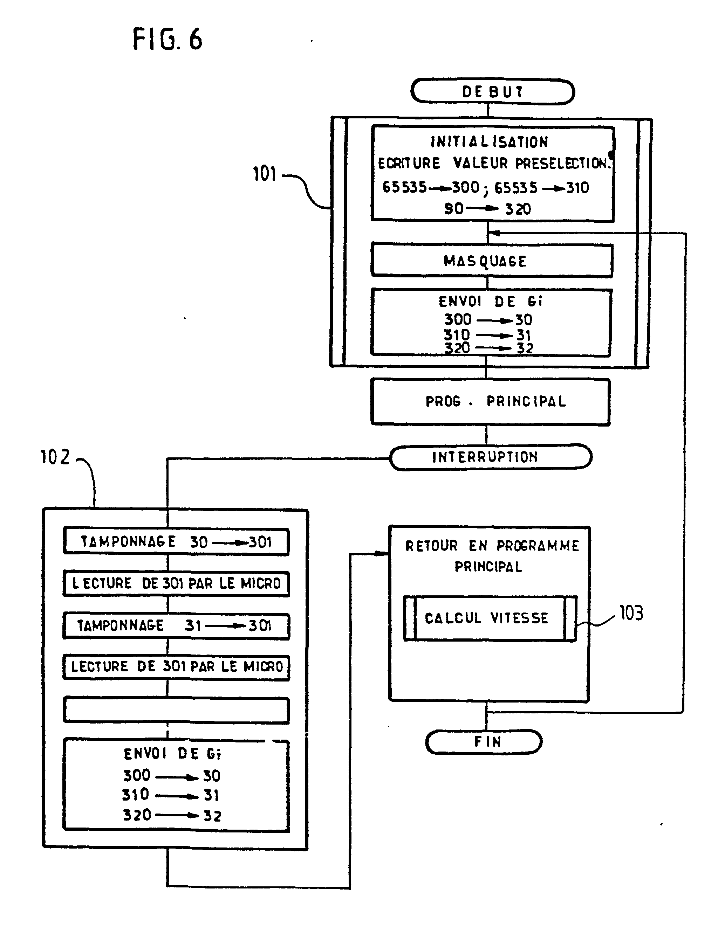

La figure 6 représente l'organigramme du programme principal et des sous programmes nécessaires au procédé de détermination de la vitesse.

Le programme principal comprend un sous programme 101, permettant une initialisation des compteurs 30, 31, 32 en écrivant des valeurs dans les registres 300, 310, 320, par exemples 65535 dans 300, 65535 dans 310 et 90 dans 320, puis, après masquage des transitions (changement d'état de la sortie $\bar{Q}_{16}$), en transférant ces valeurs dans les compteurs respectifs 30, 31, 32.

Le programme principal se déroule normalement au cours de la phase de masquage des transitions (sortie $\bar{Q}_{16}$ à l'état logique 1); puis, lors d'une transition non masquée provoquant une interruption (consécutive au passage à 0 du signal MASQ fourni par la sortie OUT 2 du compteur 32), il se branche sur un sous programme 102 appelé programme d'interruption du capteur.

Ce sous programme 102 comprend une instruction de lecture selon la séquence précédemment décrite qui comprend le transfert du contenu du compteur 30 dans le regsitre 301, puis dans la zone mémoire M1 du microprocesseur 2 et le transfert du contenu du compteur 31 dans le registre 301 puis dans la zone mémoire M2 du microprocesseur 2; cette opération de transfert dans les zones mémoire M1 et M2 est exécutée en faisant envoyer, par le microprocesseur, le signal 1 sur $\overline{WR}$ et sur A0 et des signaux 0 sur $\overline{RD}$, $\overline{CS}$ et sur A1.

Cette instruction est suivie par une instruction qui provoque l'envoi sur les entrées G0, G1, G2 des compteurs 30, 31, 32 d'une impulsion $G_1$ qui permet la réinitialisation des compteurs à des valeurs déterminées par le transfert du contenu des registres des présélections 300, 310, 320, dans les compteurs 30, 31 et 32, lors des fronts actifs suivants des signaux qui commandent ces compteurs.

La fin de l'interruption et le retour à l'état masqué s'opère sur un front montant du signal CP16 qui provoque une inversion d'état des ignaux $CP_{15}$, $\bar{Q}_{15}$ et $\bar{Q}_{16}$.

Enfin, le micropocesseur détermine la vitesse de rotation en faisant le rapport des données contenues dans les zones mémoires M1, M2. Le résultat de ce rapport peut être utilisé dans le programme principal pour une fonction de régulation.

Il peut également être disponible pour un dispositif d'affichage, non représenté, ou tout autre appareil, par le port P0.

On constate donc, à la lumière de la description qui précède, que le procédé et le dispositif évitent l'utilisation d'une deuxième horloge dite lente, comme dans le brevet FR 2 420 767.

D'autre part, ce procédé ou ce dispositif présente l'avantage d'éviter la nécessité, soit de synchroniser le masquage avec les impulsions issues du capteur, comme dans le brevet FR 2 028 875, soit de valider le comptage, par des impulsions du capteur, comme dans le brevet US 3 757 167.

Enfin, le procédé ou le dispositif permet d'avoir un capteur dont les signaux ont une fréquence supérieure à celle de l'horloge, ce qui n'est pas le cas dans le dispositif décrit dans l'article de BEDERMAN paru dans IBM.

TD.B, Vol 13 N° 4, Septembre 1970, pages 1017 à 1018.

De plus, le procédé ou le dispositif permettrait, d'une part, en faisant varier le temps de masquage des signaux d'interruption, d'obtenir la meilleure précision possible, compte tenu du calcul de la vitesse précédente et, d'autre part, de s'arranger également pour que les compteurs ne débordent pas pendant le temps de masquage, compte tenu de la plage de fonctionnement.

Il n'y a aucune perte d'impulsions, aussi bien dans le premier compteur que dans le second et la précision du dispositif en valeur moyenne est donc parfaite.

## Revendications

1. Procédé de détermination de la vitesse de rotation ou de déplacement linéaire d'un organe portant un capteur (CA) produisant des impulsions dont la fréquence est proportionnelle à la vitesse, utilisant au moins un premier compteur (30) pour compter les impulsions issues du capteur (CA) et mesurant les déplacements et un deuxième compteur (31) pour compter les impulsions délivrées par une horloge (9) de mesure du temps, lesdits premier et second compteurs (30, 31) étant reliés au bus adresses/données d'un microprocesseur (2) recevant des signaux d'interruption ($Q_{16}$) produits à des instants déterminés, par les impulsions issues du capteur (CA) et de l'horloge (9), caractérisé en ce qu'il comporte les étapes suivantes:

- le chargement des premier et second compteurs (30, 31) à une première valeur présélectionnée, puis le décomptage, de façon asynchrone entre les premier et second compteurs (30, 31), de chaque impulsion issue du capteur (CA) pour le premier compteur (30), de chaque impulsion d'horloge (9) pour le second compteur (31);

- le masquage, pendant un intervalle de temps déterminé, desdits signaux d'interruption ($\bar{Q}_{16}$);

- la lecture du contenu des premier et second compteurs (30, 31) par l'intermédiaire d'au moins un registre de lecture (301) lors de l'interruption qui suit la fin du masquage; et

- le rechargement des premier et second compteurs (30, 31) à ladite première valeur présélectionnée dès lors qu'il arrive sur l'entrée horloge (CK0, CK1) des premier et second compteurs (30, 31) une impulsion qui suit ladite lecture.

2. Procédé selon la revendication 1, caractérisé en ce que la durée de masquage est déterminée par un troisième compteur (32) préchargé à une seconde valeur présélectionnée au cours de la susdite étape de chargement, ce troisième compteur (32) effectuant un décomptage au rythme de l'horloge (9) et fournissant, au cours de ce décomptage jusqu'à 0, un signal de masquage (MASQ).

3. Procédé selon l'une quelconque des revendications précédentes, caractérisé en ce que la susdite lecture du contenu des premier et second compteurs (30, 31) comprend les étapes suivantes:

- une première étape au cours de laquelle s'effectue le transfert du premier compteur (30) dans le registre de lecture (301) ce dernier étant commun au premier et au deuxième compteurs (30, 31);

- une deuxième étape dans laquelle s'effectue le transfert du contenu du registre de lecture (301) dans une première zone (M1) d'une mémoire;

- une troisième étape dans laquelle s'effectue le transfert du contenu du second compteur (31) dans le registre de lecture (301);

- une quatrième étape au cours de laquelle s'effectue le transfert du contenu du registre (301) de lecture dans une seconde zone (M2) de ladite mémoire;

4. Procédé selon la revendication 3, caractérisé en ce qu'il comprend en outre une opération de calcul de la vitesse, cette opération étant obtenu en effectuant le quotient du contenu de la première zone (M1) de mémoire qui se trouve chargée par le contenu du premier compteur (30) par le contenu de la zone de mémoire qui se trouve chargée par le contenu du deuxième compteur (31).

5. Procédé selon l'une quelconque des revendications précédentes, caractérisé en ce que l'écriture du mot de présélection de la première valeur présélectionnée s'effectue sur le front montant d'un signal de commande ($G_i$) apparaissant avant le front montant du signal appliqué sur l'entrée ($CK_i$) du deuxième compteur (31), l'état du deuxième compteur (31) n'étant modifié que sur le front descendant dudit signal.

6. Dispositif pour la détermination de la vitesse de rotation ou de déplacement linéaire d''un organe portant un capteur (CA) produisant des impulsions dont la fréquence est proportionnelle à la vitesse, utilisant au moins un premier compteur (30) pour compter les impulsions issues du capteur (CA) et mesurant les déplacements et un deuxième compteur (31) pour compter les impulsions délivrées par une horloge (9) de mesure du temps lesdits premier et second compteurs (30, 31) étant reliés au bus adresses/données d'un microprocesseur (2) recevant des signaux d'interruption ($\bar{Q}_{16}$) produits à des instants déterminés par les impulsions issues du capteur (CA) et de l'horloge (9) ledit dispositif étant destiné à la mise en oeuvre du procédé selon l'une quelconque des revendications précédentes, caractérisé en ce qu'il comprend de plus, un circuit de comptage programmable (3) comprenant outre lesdits premier et second comptnets (30, 31), un troisième compteur (32), ce circuit de comptage (3) étant relié audit bus adresses/données (P0) du microprocesseur, un circuit de bascules de mémorisation (4) stockant les adresses permettant la sélection (ČŠ, A1, A0) des premier, second et troisième compteurs (30, 31, 32), chaque compteur (30, 31, 32) étant associé à un registre respectif de présélection (300, 310, 320) d'une valeur de réinitialisation de ce compteur et d'un registre commun (301) de lecture des valeurs comptées, et un circuit logique (1) recevant un signal de masquage (MASQ) produit par le troisième compteur (32) et produisant, en l'absence du signal de masquage des signaux d'interruption ($\bar{Q}_{16}$) en synchronisme avec une séquence engendrée par les impulsions envoyées par le capteur (CA) et par la susdite horloge (9), lesdits signaux d'interruption étant envoyés à une entrée d'interruption (INT) du microprocesseur (2).

7. Dispositif selon la revendication 6,
caractérisé en ce que le susdit circuit logique (1) comprend deux bascules de type JK, à savoir:
- une première bascule (5) qui reçoit sur sa première entrée (CP$_{15}$), par la sortie d'un circuit logique NON ET (7) les impulsions en forme de créneau provenant du capteur (CA) et appliquées sur la première entrée dudit circuit NON ET (7);
- une seconde bascule (6) qui reçoit sur sa première entrée (CP$_{16}$), par l'intermédiaire d'un premier inverseur (8), le signal émis par ladite horloge (9),
en ce que la sortie ($\bar{Q}_{15}$) de la bascule (5) est reliée, d'une part, à la seconde l'entrée (CD$_{16}$) de la seconde bascule (6) et, d'autre part, à la seconde entrée du circuit logique NON ET (7), en ce que la seconde l'entrée (CD$_{15}$) de la première bascule (5) reçoit, par l'intermédiaire d'un deuxième inverseur (10), le signal de masquage (MASQ) provenant de la sortie (OUT2) du troisième compteur (32) dudit circuit programmable de comptage (3), et
en ce que la sortie ($\bar{Q}_{16}$) de la bascule (6) est reliée à l'entrée (INT) du microprocesseur (2).

8. Dispositif selon la revendication 7,
caractérisé en ce que la sortie (P10) du port (P1) du microprocesseur (2) est reliée, d'une part, aux entrées respectives (G0, G1, G2) des premier, deuxième et troisième compteurs (30, 31, 32) et, d'autre part, à l'une des deux entrées d'un premier et d'un second circuits logiques NON OU (12, 13) dont les sorties sont respectivement reliées aux entrées d'horloge (CK0 respectives CK1 CK2) des premier, deuxième et troisième compteurs (30 et 31, 32), en ce que la seconde entrée du premier circuit NON OU (12) est reliée au capteur (CA) par l'intermédiaire d'un troisième circuit inverseur (14) et en ce que la seconde entrée du second circuit NON OU (13) est connectée à l'horloge (9) par l'intermédiaire, du premier circuit inverseur (8).

**Patentansprüche**

1. Verfahren zun Bestimmen der Drehgeschwindigkeit oder der linearen Bewegung eines Organs, mit einem Sensor (CA), der Impulse abgibt, deren Frequenz proportional zur Geschwindigkeit ist, wobei dieses Verfahren mindestens einen ersten Zähler (30) verwendet, um die von Sensor (CA) abgegebenen Impulse zu zählen und die Bewegungen zu messen, und einen zweiten Zähler (31), un die von einer Zeitmessuhr (9) abgegebenen Impulse zu zählen, wobei besagte erste und zweite Zähler (30, 31) an den Adress/Datenbus eines Mikroprozessors (2) angeschlossen sind, welcher Unterbrechungssignale ($\bar{Q}_{16}$) erhält, die zu bestimmten Zeiten von durch den Sensor (CA) und die Uhr (9) abgegebenen Impulsen erzeugt werden, dadurch gekennzeichnet, dass es die folgenden Operationen beinhaltet:
- die Ladung des ersten und zweiten Zählers (30, 31) auf einen ersten vorbestimmten Wert, dann die asynchrone Abzählung, zwischen dem ersten und zweiten Zähler (30, 31) eines jeden von Sensor (CA) abgegebenen Impulses für den ersten Zähler (30), eines jeden Impulses der Uhr (9) für den zweiten Zähler (31),
- die Überdeckung für einen bestimmten Zeitraum, der besagten Unterbrechungssignale ($\bar{Q}_{16}$),
- die Ablesung des Inhalts des ersten und zweiten Zählers (30, 31) mittels mindestens eines Ableseregisters (301) während der Unterbrechung, die auf das Ende der Überdeckung folgt; und
- die Wiederaufladung des ersten und zweiten Zählers (30, 31) auf besagten ersten vorbestimmten Wert, sobald ein, besagter Ablesung folgender Impuls an Eingang (CK0, CK1) der Uhr eintrifft.

2. Verfahren nach Anspruch 1 dadurch gekennzeichnet dass die Dauer der Überdeckung von einen dritten Zähler (32) bestimmt wird, der im Laufe der obigen Aufladungsoperation, in voraus auf einen zweiten vorbestimmten Wert aufgeladen wurde, eine Rückwärtszählung im Rhythmus der Uhr (9) vornimmt und im Laufe dieser Rückwärtszählung bis auf 0, ein Überdeckungssignal (MASQ) abgibt.

3. Verfahren nach irgendeinem der vorhergehenden Ansprüche, dadurch gekennzeichnet, dass die besagte Ablesung des Inhalts des ersten und zweiten Zählers (30, 31) folgende Operationen beinhaltet:
- eine erste Operation, in deren Verlauf das Übertragen von ersten Zähler (30) in das für den ersten und zweiten Zähler (30, 31) gemeinsame Ableseregister (301) stattfindet,
- eine zweite Operation, in deren Verlauf das Übertragen des Inhalts des Ableseregisters (301) in den ersten Bereich (M1) eines Speichers stattfindet,
- eine dritte Operation, in deren Verlauf das Übertragen des Inhaltes des zweiten Zählers in das Ableseregister (301) stattfindet,
- eine vierte Operation, in deren Verlauf das Übertragen des Inhalts des Ableseregisters (301) in einen zweiten Bereich (M2) des besagten Speichers stattfindet.

4. Verfahren nach Anspruch 3, dadurch gekennzeichnet, dass es ausserdem eine Operation zur Geschwindigkeitsberechnung enthält, wobei man diese Operation erhält indem man den Quotienten des Inhalts des ersten Speicherbereiches (M1), der mit den Inhalt des ersten Zählers (30) aufgeladen wurde, geteilt durch den Inhalt des zweiten Speicherbereiches (M2), der mit dem Inhalt des zweiten Zählers (31) aufgeladen wurde, berechnet.

5. Verfahren nach irgendeinem der vorhergehenden Ansprüche, dadurch gekennzeichnet dass die Schreibung des Vorwahlwortes des ersten vorgewählten Wortes auf der ansteigenden Front eines Steuersignals ($G_i$) stattfindet welches vor der ansteigenden Front eines Signals erscheint, das an den Eingang ($CK_i$) des zweiten Zählers (31) angelegt wird, während der Zustand des zweiten Zählers (31) erst auf der abfallenden Front des besagten Signals geändert wird.

6. Anordnung zur Bestimmung der Drehgeschwindigkeit oder der linearen Bewegung eines Organs mit einem Sensor (CA) der Impulse erzeugt, deren Frequenz proportional ist zur Geschwindigkeit, wobei diese Anordnung wenigstens einen ersten Zähler (30) verwendet, zur Zählung der von Sensor (CA) abgegebenen Impulse und zur Messung der Bewegungen, und einen zweiten Zähler (31), zur Zählung der von einer Zeitmessuhr (9) abgegebenen Impulse, wobei besagte erste und zweite Zähler (30, 31) an den Adress/Datenbus eines Mikroprozessors (2) angeschlossen sind, der Unterbrechungssignale ($\bar{Q}_{16}$) erhält, die zu bestimmten Zeiten von den durch den Sensor (Ca) und die Uhr (9) abgegebenen Impulsen erzeugt werden, wobei besagte Anordnung zur Ausführung des Verfahrens nach irgendeinem der vorhergehenden Ansprüche bestimmt ist dadurch gekennzeichnet dass sie ausserdem einen programmierbaren Zählkreis (3) enthält, der ausser den besagten ersten und zweiten Zählern (30, 31) einen dritten Zähler (32) enthält wobei dieser Zählkreis (3) an besagten Adress/Datenbus (P0) des Mikroprozessors angeschlossen ist, wobei eine Speicherkippschaltung (4) die adressen speichert, welche die Auswahl ($\bar{CS}$, A1, A0) des ersten, zweiten und dritten Zählers (30, 31, 32) ermöglichen, wobei jeder Zähler (30, 31, 32) einen entsprechenden Register (300, 310, 320) zur Vorwahl eines Reinitialisierungswertes des Zählers und eines gemeinsamen Ableseregisters (301) der gezählten Werte zugeordnet ist und eine logische Schaltung (1) die ein von dritten Zähler erzeugtes Abdecksignal (MASQ) erhölt und, in Abwesenheit des Abdecksignals, Unterbrechungssignale ($\bar{Q}_{16}$) erzeugt, synchron mit einer Abfolge die von den vom Sensor (CA) und der besagten Uhr (9) ausgesandten Impulsen hervorgebracht wird und besagte Unterbrechungssignale an eine Unterbrechungseingabe (INT.∅) des Mikroprozessors (2) gesandt werden.

7. Anordnung nach Anspruch 6, dadurch gekennzeichnet dass besagte logische Schaltung (1) zwei Kippschaltungen des Typs JK enthält nämlich
- eine erste Kippschaltung (5) welche an ihrer ersten Eingabe ($CP_{15}$) über den Ausgang einer logischen NAND-Schaltung (7) die vom Sensor (CA) kommenden Rechteckimpulse erhält, welche an die erste Eingabe der besagten NAND-Schaltung (7) angelegt werden;
- eine zweite Kippschaltung (6), die an ihrer ersten Eingabe ($CP_{16}$) durch einen ersten Inverter (8) das von besagter Uhr (9) abgegebene Signal erhält;
dass der Ausgang ($\bar{Q}_{15}$) der ersten Kippschaltung (5) einerseits an den zweiten Eingang ($CD_{16}$) der zweiten Kippschaltung (6) angeschlossen ist und andererseits an den zweiten Eingang der logischen NAND-Schaltung (7)
dass der zweite Eingang ($CD_{15}$) der ersten Kippschaltung (5) durch einen zweiten Inverter (10) das vom Ausgang (OUT2) des dritten Zählers (32) der besagten programmierbaren Zählschaltung (3) kommende Abdecksignal (MASQ) erhält
und dass der Ausgang ($\bar{Q}_{16}$) der zweiten Kippschaltung (6) an den Eingang (INT.∅) des Mikroprozessors (2) angeschlossen ist.

8. Anordnung nach Anspruch 7, dadurch gekennzeichnet, dass der Ausgang (P10) der Öffnung (P1) des Mikroprozessors (2) einerseits an die entsprechenden Eingänge (G0, G1, G2) der ersten, zweiten und dritten Zähler (30, 31, 32) angeschlossen ist und andererseits an einen der beiden Eingänge einer ersten und zweiten NOR-Schaltung (12, 13), deren Ausgänge jeweils an die entsprechenden Uhreneingänge (CK0, CK1, CK2) der ersten, zweiten und dritten Zähler (30, 31, 32) angeschlossen sind,
dass der zweite Eingang der ersten NOR-Schaltung (12) an den Sensor (CA) durch eine dritte Inverterschaltung (14) angeschlossen ist
und dass der zweite Eingang der zweiten NOR-Schaltung (13) an die Uhr (9) durch eine erste Inverterschaltung (8) angeschlossen ist.

**Claims**

1. A process for determining the speed of rotation or linear motion of a member carrying a sensor (CA) producing pulses whose frequency is proportional to the speed using at least a first counter (30) for counting the pulses from the sensor (CA) and measuring the movements, and a second counter (31) for counting the pulses delivered by a time measuring clock (9) said first and second counters (30, 31) being connected to the address/data bus of a microprocessor (2) receiving interruption signals ($\bar{Q}_{16}$) produced at determined instants by the pulses coming from the sensor (CA) and the clock (9),
characterized in that it comprises the following steps:
- loading of the first and second counters (30, 31) to a first preselected value, then downcounting, in an asynchronous way, between the first and second counters (30, 31) of each pulse coming from the sensor (CA)

**0 135 428**

for the first counter (30) of each clock (9) pulse for the second counter (31);

- masking, during a given time interval, of said interruption signals ($\bar{Q}_{16}$);
- reading of the contents of the first and second counters (30, 31) of at least one read-out register (301) during the interruption which follows the end of masking; and
- reloading of the first and second counters (30, 31) to said first preselected value as soon as a pulse which follows said read-out arrives at the clock input (CK0, CK1) of the first and second counters (30, 31).

2. The process as claimed in1 caim 1, characterized in that the duration of masking is determined by a third counter (32) preloaded to a second preselected value during said loading step, this third counter (32) downcounting at the frequency of the clock (9) and supplying a masking signal (MASQ) during this downcounting to 0.

3. The process as claimed in anyone of the preceding claims, characterized in that said read-out of the contents of the first and second counters (30, 31) comprises the following steps:

- a first step during which the transfer takes place from the first counter (30) into the read-out register (301), this latter being common to the first and second counters (30, 31);
- a second step in which the contents of the read-out register (301) are transferred into a first zone (M1) of a memory;
- a third step in which the contents of the second counter (31) are transferred into the read-out register (301);
- a fourth step during which the contents of the readout register (301) are transferred into a second zone (M2) of said memory.

4. The process as claimed in claim 3, characterized in that it further comprises an operation for calculating the speed this operation being obtained by working out the quotient of the contents of the first memory zone (M1) which is loaded with the contents of the first counter (30) divided by the contents of the second memory zone (M2) which is loaded with the contents from the second counter (31).

5. The process as claimed in anyone of the preceding claims, characterized in that writing of the preselection word for the first preselected value takes place on the rising front of a control signal ($G_i$) appearing before the rising front of the signal applied to the input ($CK_i$) of the second counter (31), the state of the second counter (31) only being modified on the downgoing front of said signal.

6. A device for determining the speed of rotation or linear motion of a member carrying a sensor (CA) producing pulses whose frequency is proportional to the speed, using at least a first counter (30) for counting the pulses coming from the sensor (CA) and measuring the movements, and a second counter (31) for counting the pulses delivered by a time measuring clock (9), said first and second counters being connected to the address/data bus of a microprocessor (2) receiving interruption signals ($\bar{Q}_{16}$) produced at determined instants by the pulses coming from the sensor (CA) and the clock (9), said device being supplied for implementing the process as claimed in anyone of the preceding claims, characterized in that it further comprises a programmable counting circuit (3) comprising, further to said first and second counters (30, 31), a third counter (32), this counting circuit (3) being connected to said address/data bus (P0) of the microprocessor, a storage flip-flop circuit (4) storing the addresses for selecting ($\bar{CS}$, A1, A0) the first, second and third counters (30, 31, 32) each counter (30, 31, 32) being associated with a respective register (300, 310, 320) for preselection of a reinitialization value of the counter and a common register (301) for reading out the counted values, and a logic circuit (1) receiving a masking signal (MASQ) produced by a third counter (32) and producing, in the absence of the masking signal, interruption signals ($\bar{Q}_{16}$) in synchronism with a sequence generated by the pulses fed by the sensor (CA) and by said clock (9), said interruption signals being fed to an interruption input (INT.$\emptyset$) of said microprocessor (2).

7. The device as claimed in claim 6, characterized in that said logic circuit (1) comprises two JK type flip-flops, namely:

- a first flip-flop (5) which receives at its first input ($CP_{15}$), through the output of a NAND logic circuit (7), the square shaped pulses coming from the sensor (CA) and applied to the first input of said NAND circuit (7);
- a second flip-flop (6) which receives at its first input ($CP_{16}$), through a first inverter (8), the signal emitted by said clock (9),

in that the output ($\bar{Q}_{16}$) of said first flip-flop (5) is connected, on the one had, to the second input ($CD_{16}$) of said second flip-flop (8) and on the other hand, to the second input of the NAND logic circuit (7),

in that the second input ($CD_{15}$) of the first flip-flop (5) receives, through a second inverter (10) the masking signal (MASQ) coming from the output (OUT2) of the third counter (32) of said programmable counting circuit (3),

and in that the output ($\bar{Q}_{16}$) of the second flip-flop (6) is connected to the input (INT.$\emptyset$) of the micropressor (2).

8. The device as claimed in claim 7, characterized in that the output (P10) of the port (P1) of the microprocessor (2) is connected, on the one hand, to the respective inputs (G0, G1, G2) of the counters (30, 31, 32) and on the other hand, to one of the two inputs of a first and a second NOR logic circuit (12, 13) whose outputs are connected to the respective clock inputs (CK0, CK1, CK2) of said first, second and third counters (30, 31, 32) and in that the second input of the first NOR circuit (12) is connected to the sensor (CA) through a third inverter circuit (14), and in that the second input of the second NOR circuit (13) is connected to the clock (9) through the first inverter circuit (8).

9

0 135 428

FIG. 1

# FIG. 2

FIN DE MASQUAGE

# FIG. 3

| $\overline{RD}$ | $\overline{WR}$ | $\overline{CS}$ | A1 | A0 | FONCTION |
|---|---|---|---|---|---|
| 1 | 0 | 0 | 0 | 0 | ECRITURE DONNEE DANS COMPTEUR 30 |
| 1 | 0 | 0 | 0 | 1 | " " " " 31 |
| 1 | 0 | 0 | 1 | 0 | " " " " 32 |
| 1 | 0 | 0 | 1 | 1 | ECRITURE DU MOT DE CONTROLE |
| 0 | 1 | 0 | 0 | 0 | LECTURE DONNEE DANS COMPTEUR 30 |
| 0 | 1 | 0 | 0 | 1 | " " " " 31 |
| 0 | 1 | 0 | 1 | 0 | " " " " 32 |
| 0 | 1 | 0 | 1 | 1 | PAS D ACTION _ BUS DONNEE HAUTE IMPEDANCE |
| X | X | 1 | X | X | BOITIER NON SELECTIONNE _ BUS DONNEE HAUTE IMPEDANCE |

0 135 428

FIG. 4

| D7 | D6 | D5 | D4 | D3 | D2 | D1 | D0 |
|----|----|----|----|----|----|----|----|

| D7 | D6 | |
|----|----|---------------|
| 0 | 0 | COMPTEUR 30 |
| 0 | 1 | " 31 |
| 1 | 0 | " 32 |
| 1 | 1 | INTERDIT |

| D5 | D4 | |
|----|----|--------------------------------|
| 0 | 0 | LECTURE A LA VOLEE |
| 0 | 1 | LECT./ECRIT. 8 BITS POIDS FORT |
| 1 | 0 | " " " " FAIBLE |
| 1 | 1 | " " 16 BITS |

| D3 | D2 | D1 | |
|----|----|----|--------|
| 0 | 0 | 0 | MODE 0 |
| 0 | 0 | 1 | " 1 |
| X | 1 | 0 | " 2 |
| X | 1 | 1 | " 3 |
| 1 | 0 | 0 | " 4 |
| 1 | 0 | 1 | " 5 |

| D0 | |
|----|---------|
| 0 | BINAIRE |
| 1 | BCD |

0 135 428

# FIG. 5

CA

H

MASQ.

$Cp_{15}$

$\overline{Q}_{15}$

$Cp_{16}$

$\overline{Q}_{16}$
interruption

$G_0, G_1, G_2$

$G_i$

$CK \phi$

$\{CK_1$
$\{CK_2$

I   II   III   IV

# FIG. 6

```
                                    ┌──────────────┐
                                    │   DEBUT      │
                                    └──────────────┘
                                           │
                    ┌──────────────────────┼────────────────────────┐
                    │  ┌────────────────────────────────────────┐    │
                    │  │           INITIALISATION               │    │
           101      │  │  ECRITURE VALEUR PRESELECTION:         │    │
             ───────┼──│    65535 ──► 300 ; 65535 ──► 310       │    │
                    │  │         90 ──► 320                      │    │
                    │  └────────────────────────────────────────┘    │
                    │                   │                             │
                    │  ┌────────────────────────────────────────┐    │
                    │  │              MASQUAGE                   │    │
                    │  └────────────────────────────────────────┘    │
                    │                   │                             │
                    │  ┌────────────────────────────────────────┐    │
                    │  │            ENVOI DE Gi                  │    │
                    │  │         300 ──► 30                      │    │
                    │  │         310 ──► 31                      │    │
                    │  │         320 ──► 32                      │    │
                    │  └────────────────────────────────────────┘    │
                    └───────────────────┼─────────────────────────────┘
                                        │
                         ┌────────────────────────────┐
                         │      PROG . PRINCIPAL       │
                         └────────────────────────────┘
                                        │
                         ┌────────────────────────────┐
                         │        INTERRUPTION        │
                         └────────────────────────────┘
```

**ENVOI DE Gi**
300 ──► 30
310 ──► 31
320 ──► 32

**TAMPONNAGE 30 ──► 301**

**LECTURE DE 301 PAR LE MICRO**

**TAMPONNAGE 31 ──► 301**

**LECTURE DE 301 PAR LE MICRO**

102

**RETOUR EN PROGRAMME PRINCIPAL**

**CALCUL VITESSE** ── 103

**FIN**